# FASCICULE DE BREVET EUROPEEN

(11) **EP 0 633 837 B1**
(45) Date de publication et mention de la délivrance du brevet: **07.02.1996**
(21) Numéro de dépôt: 93907899.4
(22) Date de dépôt: 26.03.1993
(51) Int. Cl.: B30B 15/02, B30B 11/02, B29C 43/36, B29C 43/02

(54) **APPAREIL POUR LE COMPACTAGE DE BLOCS D'UN PRODUIT AYANT TENDANCE A FOISONNER, ET PROCEDE DE COMPACTAGE CORRESPONDANT**
VORRICHTUNG UND VERFAHREN ZUM VERDICHTEN VON BLöCKEN AUS EINEM SCHWELLENDEN MATERIAL
BULKABLE MATERIAL COMPACTION APPARATUS AND METHOD

(30) Priorité: 30.03.1992 FR 9203819
(43) Date de publication de la demande: 18.01.1995
(73) Titulaire: CRAY VALLEY SA, F-92800 Puteaux (FR); BERNHARDT, F-62201 Boulogne-sur-Mer (FR)
(72) Inventeur: GOURLET, Jacques, F-62200 Boulogne-sur-Mer (FR); LAMARCHE, Philippe, F-11110 Vinassan (FR)
(74) Mandataire: Chaillot, Geneviève
(86) Numéro de dépôt international: FR9300307
(87) Numéro de publication internationale: WO9319930

(56) Documents cités:
- DE-A- 2 242 168
- FR-A- 1 054 219
- US-A- 3 811 808

## Description

La présente invention concerne le conditionnement de produits ayant une consistance pâteuse à solide, modelables, ayant tendance à foisonner, c'est-à-dire à reprendre du volume, et/ou à s'émietter, pour en constituer des blocs compactes, généralement réguliers dans leur forme et leur poids, suivant des dimensions préalablement choisies, interdisant un arrachement de morceaux de ces blocs lors des manipulations ultérieures, avec la possibilité de faire varier, selon les besoins, la forme et la dimension des blocs obtenus, ainsi qu'avec la possibilité d'introduire les blocs obtenus dans des sachets étanches de conservation. L'invention a pour objet un appareil pour le compactage de blocs d'un tel produit, ainsi qu'un procédé de compactage de blocs préformés d'un produit modelable.

A titre d'exemples des produits que l'appareil selon l'invention permet de conditionner, on peut citer les compositions de moulage en masse, encore appelés BMC, à base de résine - polyester ou phénolique par exemple -, de fibres de verre coupées, de charges minérales pulvérulentes, et le cas échéant, d'adjuvants usuels tels que les colorants. Ces compositions sont obtenues par malaxage de leurs constituants, conduisant à une pâte qui doit être homogène. Une fois formée, cette pâte est en règle générale adressée à un outil de formatage, tel qu'une calibreuse à piston, qui permet de la placer sous la forme d'un boudin qui est coupé à des intervalles déterminés pour obtenir des blocs (ou doses) initialement cylindriques.

Ces doses sont destinées à être introduites, en alimentation directe, dans des systèmes de préchargement relativement précis, par exemple du type à godets, de machines de moulage par injection. C'est pour cette raison que l'on cherche à obtenir des doses de forme compacte et régulière.

Or, les outils de formatage connus, mentionnés ci-dessus, ne permettent pas d'obtenir des doses ayant ces caractéristiques. En effet, les doses récupérées, bien qu'on leur ait donné une forme, ont tendance à se déformer, perdant leur régularité, et présentant, entre autres, une tendance au foisonnement, notamment lorsque la teneur en fibres est élevée.

Par ailleurs, ces compositions de moulage en masse peuvent contenir des constituants volatils, par exemple du styrène dans le cas de compositions à base de polyester ; pour cette raison, il est souhaitable de parvenir à un conditionnement étanche des doses obtenues.

Enfin, le conditionnement ne doit pas conduire à une détérioration des caractéristiques mécaniques de la composition de moulage en masse, ce qui se passe si l'on utilise des machines à vis, lesquelles procurent certes une bonne stabilité dimensionnelle des doses, mais peuvent provoquer un cisaillement trop important ou, dans le cas ou les compositions comportent des fibres, casser ces fibres, ce qui représente une gêne importante puisque la longueur de celles-ci a été prévue en fonction de caractéristiques souhaitées pour le produit moulé final.

La présente invention vise à remédier aux inconvénients précités et elle propose, à cet effet, un appareil qui permet d'assurer de manière aisée et de façon automatique ou semi-automatique, un compactage géométrique répondant aux conditions requises, entre autres ne modifiant pas les caractéristiques mécaniques des blocs compactés.

La présente invention a donc pour objet un appareil pour constituer, à partir de blocs préformés d'un produit modelable, ayant une consistance pâteuse à solide et pouvant avoir tendance à foisonner et/ou à s'émietter, des blocs compacts présentant une stabilité dimensionnelle, caractérisé par le fait qu'il comprend :
- au moins une chambre de compactage latéralement fermée, susceptible d'être fermée au niveau de son fond par une plaque escamotable, et ouverte à l'opposé de son fond, au moins une partie de la paroi latérale délimitant ladite chambre de compactage étant mobile pour que la section transversale de ladite chambre soit variable dans sa dimension et, le cas échéant, dans sa forme, entre une section (S) de dimension et forme autorisant l'introduction d'un bloc préformé à compacter dans ladite chambre de compactage et une section (s), de surface inférieure à celle de la section (S) et de dimension et forme correspondant à celles du bloc compacté à obtenir ;
- des moyens pour alimenter, par les blocs préformés à compacter, la ou chaque chambre de compactage, par l'ouverture opposée à son fond et en position de fermeture de ce dernier ;
- des moyens pour faire varier la section de la ou de chaque chambre de compactage alors qu'elle renferme un bloc à compacter, assurant ainsi un compactage transversal du bloc introduit ;
- des moyens pour ouvrir le fond de la ou de chaque chambre de compactage par escamotage de la plaque qui le ferme, une même plaque pouvant être commune à plusieurs chambres ;
- des moyens pour éjecter, de la ou de chaque chambre de compactage, les blocs compactés formés ; et
- des moyens pour en assurer le déchargement.

Conformément à un mode de réalisation préféré de l'invention, l'appareil comprend en outre des moyens pour assurer un compactage axial d'un bloc contenu dans une chambre de compactage, selon la ligne axiale moyenne dudit bloc, alors que cette chambre de compactage est dans une position où elle présente la section transversale (s), ces moyens pouvant également être actionnés pour assurer l'éjection du bloc compacté à la fois transversalement et axialement, en position ouverte du fond de la chambre de compactage. Les moyens de compactage axial sont avantageusement constitués par un piston presseur dont la tête présente une section des mêmes forme et dimension que la section (s) et qui est actionnable pour pénétrer axialement dans la chambre de compactage associée, par l'ouverture opposée à son fond, afin de comprimer le bloc déjà compacté transversalement qu'elle contient.

De préférence, ces moyens de compactage axial sont adaptés pour assurer un contrôle de la hauteur des blocs compactés, par exemple par réglage de la course du piston presseur.

Conformément à une première variante de l'appareil de compactage de la présente invention, la ou chaque chambre de compactage est délimitée latéralement par un élément de paroi fixe, et par un élément de paroi mobile constitué par une feuille de matière flexible revêtue intérieurement d'une matière non-adhérente, la feuille étant repliée pour venir en appui contre les deux bordures libres de l'élément de paroi fixe, au-delà desquelles elle se prolonge par deux bandes d'extrémité susceptibles d'être alternativement tirées et repoussées pour faire passer la chambre de compactage respectivement à la section (s) et à la section (S), une butée fixe étant disposée à l'opposé de l'élément de paroi fixe, ladite butée étant agencée pour faire prendre à la feuille flexible qui vient s'y appuyer en position repoussée desdites bandes d'extrémité, une forme correspondant à la section (S) de ladite chambre, et des moyens de guidage de ladite paroi flexible étant disposés dans la zone d'appui de celle-ci contre les bords de l'élément de paroi fixe.

En particulier, la section (s) est une section circulaire, l'élément de paroi fixe consistant en une coquille fixe en forme de demi-cylindre et la feuille de matière flexible étant repliée pour présenter, en coupe transversale, une forme en fer à cheval dans la position où la chambre de compactage présente la section (S).

Conformément à une seconde variante de l'appareil de compactage de la présente invention, la ou chaque chambre de compactage est délimitée latéralement par deux bandes parallèles opposées, fermées d'un côté par un premier élément de paroi fixe, un second élément de paroi, mobile, étant susceptible de se déplacer par translation entre les deux bandes parallèles, du côté opposé audit premier élément de paroi fixe.

Par ailleurs, l'appareil selon l'invention peut comporter avantageusement des moyens de conditionnement des blocs compactés dans des sachets étanches dès leur éjection hors de la chambre de compactage. De plus, les moyens de déplacement des parties mobiles de l'appareil selon l'invention peuvent être de n'importe quel type, à commande mécanique, hydraulique et/ou pneumatique par exemple.

La présente invention porte également sur un procédé de compactage de blocs préformés d'un produit modelable, caractérisé par le fait qu'il met en oeuvre un appareil tel que défini ci-dessus.

Pour mieux faire comprendre l'objet de la présente invention, on va en décrire ci-après, à titre d'exemples purement illustratifs et non-limitatifs, deux modes de réalisation représentés sur le dessin annexé.

Sur ce dessin :
- la Figure 1 est une vue schématique, en élévation latérale, d'un appareil de compactage de blocs ou doses de produits tels que des BMC, conforme à un mode de réalisation de l'invention ;
- la Figure 2 est une vue de dessus correspondant à la Figure 1 ;
- la Figure 3 est une vue partielle de dessus de la chambre de compactage de l'appareil de la Figure 1 dans sa position de réception d'un bloc de BMC à compacter, le dispositif de commande du déplacement de la paroi latérale mobile de la chambre de compactage étant également partiellement représenté sur cette Figure ;
- la Figure 3a est une vue analogue à la Figure 3 montrant une variante de réalisation de la chambre de compactage, dans la même position de réception d'un bloc de BMC à compacter ;
- la Figure 4 est une vue analogue à la Figure 3, mais montrant la chambre de compactage dans la position finale de compactage transversal du bloc introduit : et
- la Figure 5 est une vue en perspective de la chambre de compactage de l'appareil de la Figure 1 dans la position finale de compactage transversal, les dispositifs pour la commande du déplacement de la paroi latérale mobile et de la plaque de fond escamotable de la chambre de compactage, ainsi qu'un piston presseur mesureur pour le compactage axial étant représentés partiellement sur cette Figure.

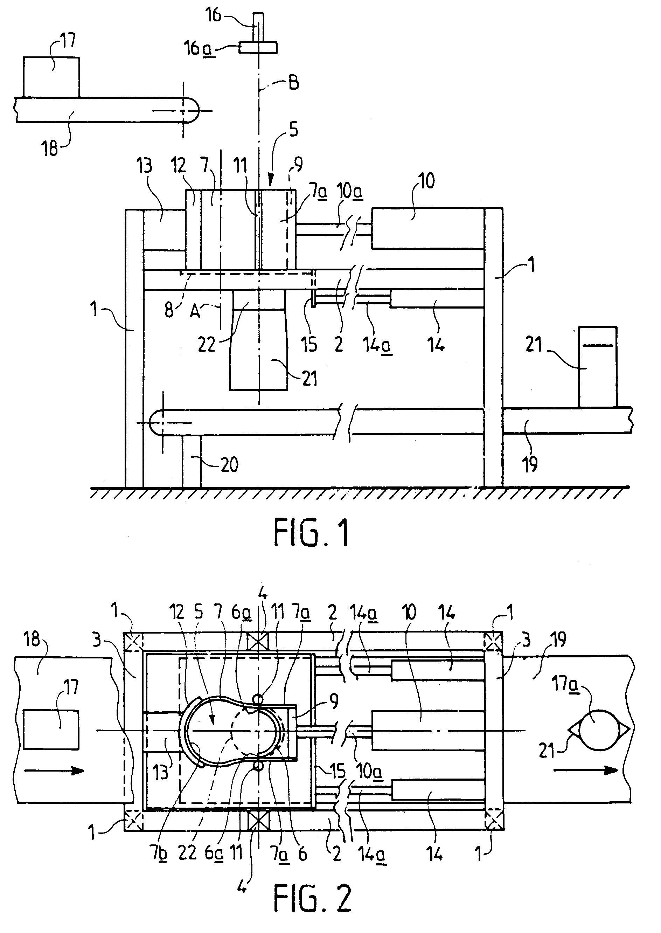

Si l'on se réfère aux Figures 1 et 2, on peut voir que l'appareil de compactage représenté comprend un bâti formé de différents montants et traverses, tous n'ayant pas été représentés sur les Figures 1 et/ou 2 pour faciliter la lecture de celles-ci. Entre autres, on peut mentionner quatre montants verticaux d'angle 1, disposés aux quatre angles d'un rectangle et réunis deux à deux par des traverses horizontales, longitudinales (2) et transversales (3), disposées à des hauteurs appropriées pour supporter les éléments fixes de l'appareil qui seront décrits ci-après. D'autres montants verticaux 4 sont prévus pour supporter le piston 16 et les tiges de guidage 11 qui seront décrits ci-après.

Une chambre de compactage 5 est supportée à la partie supérieure de l'appareil, en un emplacement situé sur la gauche si l'on regarde les Figures 1 et 2. La chambre 5 est délimitée latéralement par une paroi fixe 6 et par une paroi mobile 7. Dans sa position de réception d'un bloc de produit et pendant l'opération de compactage transversal, comme cela sera décrit ci-après, la chambre 5 est ouverte à sa partie supérieure. Quant à la partie inférieure de la chambre 5, elle est susceptible d'être fermée, dans sa position de réception, et pendant le compactage transversal des blocs à compacter par une plaque 8 déplaçable horizontalement, comme cela est également décrit ci-après.

La paroi fixe 6, désignée aussi ci-après par le terme "demi-coquille", supportée par des moyens non représentés sur le dessin, est en forme de demi-cylindre et elle est disposée avec son axe vertical et avec sa concavité tournée vers le côté transversal du bâti se trouvant sur la gauche si l'on regarde la Figure 1.

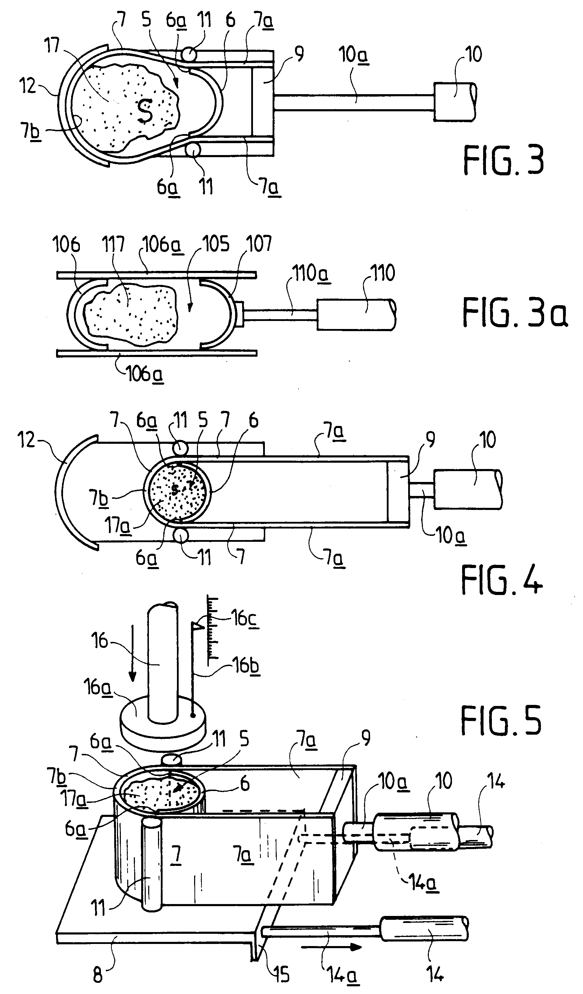

La paroi mobile 7 se compose d'une bande de matière flexible, revêtue sur sa face interne par une matière non-adhérente de type Teflon. Sa largeur est sensiblement égale à la hauteur de la demi-coquille 6 et elle est disposée, dans la position de réception des blocs à compacter de la chambre de compactage, comme on peut le voir sur les Figures 2 et 3, en étant repliée pour avoir, en section transversale, une forme en fer à cheval. Les bords de ladite bande se prolongent suivant deux bandes 7a parallèles entre elles et au plan longitudinal moyen de la partie à section en fer à cheval, la distance entre les deux bandes 7a étant légèrement supérieure au diamètre de la demi-coquille 6.

Dans la position de réception des blocs de la chambre de compactage 5, les bandes 7a viennent en appui, dans la zone de jonction avec la partie à section en fer à cheval, contre les bords libres respectifs 6a de la demi-coquille 6. Par ailleurs, à leurs extrémités libres, les bandes 7a sont réunies par une entretoise 9 de même hauteur que les parois latérales 6 et 7 de la chambre 5. L'entretoise 9 est reliée à la tige 10a d'un piston 10 fixé à la traverse transversale 3 située sur la droite si l'on regarde les Figures 1 et 2. En outre, deux tiges cylindriques fixes de guidage 11, dont les moyens de fixation n'ont pas été représentés sur le dessin, sont disposées verticalement dans le plan diamétral de la demi-coquille 6, en étant écartées chacune de la bordure libre respective 6a de cette dernière d'une distance légèrement supérieure à l'épaisseur de la paroi flexible 7.

La partie cintrée 7b de la paroi flexible 7, disposée en vis-à-vis de la demi-coquille 6, se trouve, en position de réception des blocs par la chambre 5, en appui contre un support 12, fixe, en forme de section de cylindre, de concavité tournée vers la demi-coquille 6, dont le rayon de courbure correspond à celui de la partie cintrée 7c considérée dans cette position de réception de la chambre 5 et qui est relié, par une patte 13, à la traverse 3 située à gauche si l'on regarde les Figures 1 et 2.

La plaque de fond 8 présente une forme rectangulaire, de largeur légèrement inférieure à la distance séparant deux entretoises longitudinales opposées 2 et de longueur représentant à peu près la moitié de la longueur de ces traverses ; la plaque 8 est déplaçable horizontalement sous l'action de deux vérins latéraux 14, qui sont disposés parallèlement au vérin 10 et au-dessous de celui-ci et dont les tiges 14a sont reliées au rebord correspondant 15, tourné vers le bas, de la plaque 8.

L'appareil selon l'invention comporte également un piston presseur 16 (Figure 1), disposé au-dessus de la chambre 5, selon un axe sensiblement confondu avec l'axe de la demi-coquille 6, et dont les moyens de commande n'ont pas été représentés. La tête 16a du piston presseur 16 présente une surface circulaire correspondant sensiblement à celle du bloc ayant subi le compactage transversal, comme cela sera décrit ci-après.

Les blocs 17, destinés à être compactés, sont disposés de façon successive sur un tapis roulant d'entrée 18 lequel est placé au-dessus de l'appareil de compactage qui vient d'être décrit, de telle sorte que sa bordure libre se trouve sensiblement au droit du centre de l'espace délimité par le support cintré 12. Lorsqu'un bloc 17 arrive en fin de course du tapis roulant 18, il tombe dans la partie large à section en fer à cheval de la chambre 5 et il est alors reçu sur la plaque 8 qui ferme le fond de la chambre 5, l'axe de chute du bloc 17 étant représenté par le trait mixte A sur la Figure 1.

A la partie inférieure de l'appareil de compactage, est disposé un tapis roulant de sortie 19, supporté par des pieds 20, susceptible de transporter les blocs compactés 17a contenus dans des sachets 21. Ceux-ci sont prédisposés sous la chambre de compactage 5, selon l'axe de compactage axial B (Figure 1), sur un cylindre fixe 22 disposé sous la plaque 8. L'alimentation de l'appareil de compactage en sachets 21 s'effectue automatiquement, à l'aide d'un mécanisme extérieur non représenté.

Le mouvement de déplacement des vérins 10 et 14 et du piston 16 est commandé par une centrale, non représentée, de façon à assurer les séquences et les temps de cycle nécessaires au fonctionnement de l'appareil et à l'obtention du débit maximum des blocs compactés.

Le fonctionnement de l'appareil qui vient d'être décrit est le suivant :
En position de repos, les tiges des vérins 10 et 14 sont sorties et la tige du vérin 16 est rentrée. La chambre de compactage 5 occupe la position telle que montrée sur les Figures 1 et 3, présentant une section transversale (S) délimitée par la forme en fer à cheval de la paroi flexible 7, en étant fermée par la demi-coquille fixe 6. Le tapis roulant d'entrée 18 est déplacé jusqu'à ce qu'un bloc 17 tombe dans la chambre 5 selon l'axe de chute A (Figure 3). A ce moment, le vérin 10 est commandé pour assurer, par la rentrée de sa tige 10a, une traction sur les bandes 7a prolongeant la paroi flexible 7. La chambre 5 voit alors sa section transversale se modifier pour passer à une section circulaire (s) (Figure 4) où la paroi 7 s'est escamotée de façon symétrique derrière les bords 6a de la demi-coquille 6, pour prendre la forme sensiblement semi-cylindrique, complémentaire de cette dernière. Les tiges 11 assurent dans cette opération un guidage correct de la paroi mobile 7.

Le compactage transversal du bloc 17 étant réalisé, on commande ensuite le déplacement du piston presseur 16 pour assurer la sortie de sa tige, la tête 16a venant alors appuyer sur le bloc 17 pour en assurer un compactage axial. On relâche ensuite la pression sur le mécanisme de déplacement de la paroi 7. On commande les pistons 14 pour qu'ils déplacent la plaque 8, par la rentrée de leurs tiges 14a, afin de libérer le fond de la chambre de compactage 5, laquelle se trouve dans sa forme cylindrique. On commande le piston presseur 16 pour qu'un léger déplacement vers le bas de celui-ci contraigne le bloc cylindrique 17a à être recueilli par le sachet 21 disposé à cet effet, lequel tombe ensuite sur le tapis roulant 19 qui l'entraîne vers la sortie.

Le mécanisme de déplacement des parties mobiles de l'appareil de compactage est alors remis à l'état de repos pour un nouveau cycle de travail. En fin de course de la paroi mobile 7, celle-ci vient en appui contre la butée 12 pour prendre aisément sa forme en section en fer à cheval.

A titre d'exemple, on peut former des blocs cylindriques de l'ordre de 100-150 mm de diamètre, de 150-250 mm de hauteur et de l'ordre de 4-6 kg, en un temps de cycle de l'ordre de 2-5 secondes.

Sur la Figure 3a, on a représenté une variante de réalisation des parois latérales de la chambre de compactage. Celle-ci (105) est délimitée par deux coquilles opposées 106; 107 chacune en forme de demi-cylindre à axe vertical, disposées avec leurs concavités tournées l'une vers l'autre. L'une (106) est fixe et l'autre (107) est déplaçable par l'entrée et la sortie de la tige (110a) d'un piston 110, entre deux bandes latérales parallèles opposées (106a) disposées de façon fixe selon les tangentes communes aux deux demi-coquilles 106, 107.

Par ailleurs, la plaque 16a du piston 16 peut être équipée d'une tige 16b avec un index 16c déplaçable le long de cette tige. L'index 16c peut servir de repère pour déterminer un bon niveau de compactage, ou peut lui-même actionner un capteur qui permet de poursuivre le cycle.

Il est bien entendu que les modes de réalisation ci-dessus décrits ne sont aucunement limitatifs et pourront donner lieu à toutes modifications désirables, sans sortir pour cela du cadre de l'invention comme revendiquée

## Revendications

1. Appareil pour constituer, à partir de blocs préformés (17) d'un produit modelable, ayant une consistance pâteuse à solide et pouvant avoir tendance à foisonner et/ou à s'émietter, des blocs compacts (17a) présentant une stabilité dimensionnelle, caractérisé par le fait qu'il comprend :
- au moins une chambre de compactage (5) latéralement fermée, susceptible d'être fermée au niveau de son fond par une plaque escamotable (8), et ouverte à l'opposé de son fond, au moins une partie de la paroi latérale délimitant ladite chambre de compactage (5) étant mobile pour que la section transversale de ladite chambre (5) soit variable dans sa dimension et, le cas échéant, dans sa forme, entre une section (S) de dimension et forme autorisant l'introduction d'un bloc préformé (17) à compacter dans ladite chambre de compactage (5) et une section (s), de surface inférieure à celle de la section (S) et de dimension et forme correspondant à celles du bloc compacté (17a) à obtenir :
- des moyens (18) pour alimenter, par les blocs préformés (17) à compacter, la ou chaque chambre de compactage (5), par l'ouverture opposée à son fond et en position de fermeture de ce dernier ;
- des moyens (10) pour faire varier la section de la ou de chaque chambre de compactage (5) alors qu'elle renferme un bloc à compacter (17), assurant ainsi un compactage transversal du bloc (17) introduit ;
- des moyens (14) pour ouvrir le fond de la ou de chaque chambre de compactage (5) par escamotage de la plaque (8) qui le ferme, une même plaque (8) pouvant être commune à plusieurs chambres (5) ;
- des moyens (16) pour éjecter, de la ou de chaque chambre (5) de compactage, les blocs compactés formés (17a) ; et
- des moyens (19) pour en assurer le déchargement.

2. Appareil selon la revendication 1, caractérisé par le fait qu'il comprend des moyens (16) pour assurer un compactage axial d'un bloc (17) contenu dans une chambre de compactage (5), selon la ligne axiale moyenne dudit bloc (17), alors que cette chambre de compactage (5) est dans une position où elle présente la section transversale (s), ces moyens (16) pouvant également être actionnés pour assurer l'éjection du bloc compacté (17a) à la fois transversalement et axialement, en position ouverte du fond de la chambre de compactage (5).

3. Appareil selon la revendication 2, caractérisé par le fait que les moyens (16) de compactage axial sont constitués par un piston dont la tête (16a) présente une section des mêmes forme et dimension que la section (s) et est actionnable pour pénétrer axialement dans la chambre de compactage associée (5), par l'ouverture opposée à son fond, afin de comprimer le bloc (17) déjà compacté transversalement qu'elle contient.

4. Appareil selon l'une des revendications 2 et 3, caractérisé par le fait que les moyens (16) de compactage axial sont adaptés pour assurer un contrôle de la hauteur des blocs compactés (17a).

5. Appareil selon l'une des revendications 1 à 4, caractérisé par le fait que la ou chaque chambre de compactage (5) est délimitée latéralement par un élément de paroi fixe (6) et par un élément de paroi mobile (7) constitué par une feuille de matière flexible revêtue intérieurement d'une matière non-adhérente, la feuille étant repliée pour venir en appui contre les deux bordures libres (6a) de l'élément de paroi fixe (6), au-delà desquelles elle se prolongent par deux bandes d'extrémité (7a) susceptibles d'être alternativement tirées et repoussées pour faire passer la chambre de compactage (5) respectivement à la section (s) et à la section (S), une butée fixe (12) étant disposée à l'opposé de l'élément de paroi fixe (7), ladite butée (12) étant agencée pour faire prendre à la feuille flexible (7) qui vient s'y appuyer en position repoussée desdites bandes d'extrémité (7a), une forme correspondant à la section (S) de ladite chambre (5), et des moyens de guidage (11) de ladite paroi flexible (7) étant disposés dans la zone d'appui de celle-ci contre les bords (6a) de l'élément de paroi fixe (6).

6. Appareil selon la revendication 5, caractérisé par le fait que la section (s) est une section circulaire, l'élément de paroi fixe (6) consistant en une coquille fixe en forme de demi-cylindre et la feuille (7) de matière flexible étant repliée pour présenter, en coupe transversale, une forme en fer à cheval dans la position où la chambre de compactage (5) présente la section (S).

7. Appareil selon l'une des revendications 1 à 4, caractérisé par le fait que la ou chaque chambre de compactage (5) est délimitée latéralement par deux bandes parallèles opposées (106a), fermées d'un côté par un premier élément de paroi (106), fixe, un second élément de paroi (107), mobile, étant susceptible de se déplacer par translation entre les deux bandes parallèles (106a), du côté opposé audit premier élément de paroi fixe (106).

8. Appareil selon l'une des revendications 1 à 7, caractérisé par le fait qu'il comporte des moyens de conditionnement des blocs compactés (17a) dans des sachets étanches (21) dès leur éjection hors de la chambre de compactage (5).

9. Appareil selon l'une des revendications 1 à 8, caractérisé par le fait que les moyens de déplacement de ses parties mobiles sont des moyens à commande mécanique, hydraulique et/ou pneumatique.

10. Appareil selon l'une des revendications 1 à 9, caractérisé par le fait que le produit est constitué par une composition de moulage en masse, à base de résine, de fibres de verre coupées, de charges minérales pulvérulentes et, le cas échéant, d'adjuvants usuels.

11. Procédé de compactage de blocs préformés d'un produit modelable, caractérisé en ce qu'il met en oeuvre un appareil selon l'une des revendications 1 à 10.

## Claims

1. Equipment to form, on the basis of preformed blocks (17), a product suitable for modeling, having a pasty to solid consistency and which may tend to grow and/or crumble, compact blocks (17a) having dimensional stability characterized by the fact that it includes:
- at least one compacting chamber (5) closed on the sides, liable to be closed at the base by a retracting plate (8), and open on the face opposite to the base, with at least part of the side wall delimiting said compacting chamber (5) being mobile so that the transversal section of said chamber (5) is variable in size and if necessary, in its form, between a section (S) having dimensions and forms suitable for the acceptance of a preformed block (17) to be compacted in said compacting chamber (5) and a section (s), having a surface area smaller than that of section (S) and whose dimensions and shape correspond to those of the compacted block (17a) to be obtained;
- means (18) of feeding by the preformed blocks (17) to be compacted, the compacting chamber or each compacting chamber (5) through an opening opposite the base when the chamber is in the closed position;
- means (10) of varying the section of the compacting chamber or of each compacting chamber (5) when containing a block to be compacted (17) thus ensuring transversal compacting of the inserted block (17);
- means (14) of opening the base of the compacting chamber or of each compacting chamber (5) by the retraction of closing plate (8) while a same plate (8) may be common to several chambers (5);
- means (16) of ejecting from the compacting chamber or from each compacting chamber (5) the formed compacted blocks (17a); and
- means (19) for their unloading.

2. Equipment according to claim 1, characterized by the fact that it includes means (16) of the axial compacting of a block (17) contained in a compacting chamber (5) according to the mean axial line of said block (17) whereas this compacting chamber (5) is in a position where it has a transversal section (s) which means (16) may also be actuated to eject the compacted block (17a), after both transverse and axial compacting, with the compacting chamber (5) base in the open position.

3. Equipment according to claim 2, characterized by the fact that the axial compacting means (16) consists of a piston whose head (16a) has a section having the same shape and dimension as the section (s) and can be actuated to penetrate axially into the associated compacting chamber (5) through the opening opposite its base so as to compress the block (17) it contains, already compacted transversally.

4. Equipment according to one of the claims 2 and 3, characterized in that the means of axial compacting (16) are suitable for controlling the height of the compacted blocks (17a).

5. Equipment according to one of claims 1 to 4, characterized by the fact that the compacting chamber or each compacting chamber (5) is delimited laterally by a fixed wall element (6) and a mobile wall element (7) consisting of a sheet of flexible material lined with non-stick material on the inside, said sheet being folded to bear against the two free edges (6a) of the fixed wall element (6) beyond which it extends in the form of two end strips (7a) liable to be alternately pulled and pushed so that the compacting chamber (5) changes from section (s) to section (S) with a fixed stop (12) arranged opposite the fixed wall element (7) said stop (12) being arranged to ensure that flexible leaf (7) which bears upon it when pushed by said end strips (7a) takes on a shape corresponding to section (S) of said chamber (5) and means (11) of guiding said flexible wall (7) being arranged in the bearing area of the wall against the edges (6a) of the fixed wall element (6).

6. Equipment according to claim 5, characterized by the fact that the section (s) is a circular section, the fixed wall element (6) forming a fixed shell which is semi-cylindrical and a sheet (7) of flexible material being folded in order to present, as a transversal section, a horseshoe shape in the position where the compacting chamber (5) has a section (S).

7. Equipment according to one of the claims 1 to 4, characterized by the fact that the compacting chamber or each compacting chamber (5) is laterally delimited by two opposed parallel strips (106a) closed on one side by a first fixed wall element (106), a second mobile wall element (107), which is liable to move by translation between the two parallel strips (106a), on the opposite side to the first fixed wall element (106).

8. Equipment according to one of claims 1 to 7, characterized by the fact that it includes means of preserving the compacted blocks (17a) in sealed bags (21) on their ejection out of compacting chamber (5).

9. Equipment according to one of claims 1 to 8, characterized by the fact the means of moving the mobile parts are mechanical, hydraulic and/or pneumatic control means.

10. Equipment according to one of claims 1 to 9, characterized by the fact that the product consists of mass molded composition, based on resin, cut glass fiber, powder-form mineral fillers and where applicable, the customary additives.

11. Process of compacting preformed blocks of a modelable product, characterized in that it uses equipment according to one of claims 1 to 10.

## Patentansprüche

1. Anlage zur Herstellung kompakter, bemaßungsstabiler Blöcke (17a), ausgehend von vorgeformten Blöcken (17) eines formbaren Produktes pastöser bis solider Konsistenz mit Neigung zum Aufquellen und/oder Zerbröckeln, charakterisiert dadurch, daß die Anlage folgende Komponenten aufweist:
- mindestens eine seitlich geschlossene Kompaktierkammer (5), die im Bodenbereich von einer einziehbaren Platte (8) schliessbar und auf der Bodengegenseite offen ist, wobei mindestens ein Teil der seitlichen Wandung, die die genannte Kompaktierkammer (5) abgrenzt, beweglich ist, damit der Transversalquerschnitt der genannten Kammer (5) abmessungsvariabel und ggf. formverstellbar ist, und zwar in einem Abmessungs- u. Formabschnitt (S), der die Einführung eines vorgeformten Blockes (17) zulässt, der in der genannten Kompaktierkammer (5) zu kompaktieren ist und in einem Abschnitt (s) kleinerer Fläche als die des Abschnittes (S) in einer dem zu erhaltenden, kompaktierten Block (17a) entsprechenden Form und Abmessung;
- Einrichtungen (18), um die vorgeformten zu kompaktierenden Blöcke (17) in die einzelne bzw. mehrere Kompaktierkammer(n) (5) einzuführen und zwar durch die auf der Bodengegenseite angeordnete, sich in Schliessposition befindliche Öffnung;
- Einrichtungen (10) zum Variieren des Abschnittes der einzelnen bzw. jeder Kompaktierkammer (5), die den zu kompaktierenden Block (17) enthält und somit eine transversale Kompaktierung des eingeführten Blockes (17) sicherstellt;
- Einrichtungen (14) zum Öffnen des Bodens der einzelnen bzw. jeder Kompaktierkammer (5) durch Einziehen der Schliessplatte (8), die mehreren Kammern (5) zugeordnet werden kann;
- Einrichtungen (16) zum Auswerfen aus der bzw. jeder Kompaktierkammer (5) der kompaktierten, geformten Blöcke (17a); und
- Einrichtungen (19) zum Evakuieren.

2. Gerät gem. Patentanspruch 1, charakterisiert dadurch, daß es Einrichtungen (16) aufweist zur axialen Kompaktierung eines in einer Kompaktierkammer (5) enthaltenen Blockes (17), eine Kammer, die in zentraler, axialer Linie dieses Blockes (17) ausgerichtet ist, wobei sich hierbei diese Kompaktierkammer (5) in einer auf den transversalen Abschnitt (s) ausgerichteten Position befindet. Dabei sind diese Einrichtungen (16) so steuerbar, daß der Auswurf des kompaktierten Blockes (17a) sowohl transversal als auch axial, bei geöffneter Position des Kompaktierkammerbodens (5), erfolgen kann.

3. Gerät gem. Patentanspruch 2, charakterisiert dadurch, daß die axialen Kompaktiereinrichtungen (16) aus einem Kolben bestehen, dessen Kopf (16a) dieselbe Form u. Abmessung aufweist wie der Abschnitt (s). Der Kolben ist so steuerbar, daß er axial in die zugeordnete Kompaktierkammer (5) eindringen kann, und zwar über die entgegengesetzt zum Boden angebrachte Öffnung, um den bereits transversal kompaktierten, sich in der Kammer befindlichen Block (17) zu verdichten.

4. Gerät gem. einer der Patentansprüche 2 u. 3, dadurch gekennzeichnet, daß die axialen Kompaktiereinrichtungen (16) zur Sicherstellung einer Höhenkontrolle der kompaktierten Blöcke (17a) entsprechend angepaßt sind.

5. Gerät gem. einer der Patentansprüche 1 - 4, dadurch gekennzeichnet, daß die bzw. jede Kompaktierkammer (5) seitlich begrenzt ist durch ein feststehendes Wandungselement (6) sowie durch ein gleiches bewegliches (7), bestehend aus einer innen haftabweisenden Lamelle aus flexiblem Werkstoff, eine Lamelle die so gestaucht ist, daß sie sich an den beiden freien Rändern (6a) des feststehenden Wandungselementes (6) abstützt u. oberhalb in der Verlängerung mit zwei Endbändern (7a) weitergeht, die alternativ gezogen oder herausgedrückt werden können, um die Kompaktierkammer (5) jeweils zum Abschnitt (s) und Abschnitt (S) heranzuführen, wobei ein Festanschlag (12) entgegengesetzt zur feststehenden Wandung (7) angebracht ist. Dieser Festanschlag (12) ist so ausgebildet, daß die flexible Lamelle, die in zurückgedrückter Position der genannten Endoänder (7a) sich hier abstützt, eine dem Abschnitt (S) der genannten Kammer (5) entsprechende Form annimmt, wobei Führungseinrichtungen (11) der besagten flexiblen Wandung (7) innerhalb des Stützbereiches derselben an den Rändern (6a) der feststehenden Wandung (6) angeordnet sind.

6. Gerät gem. Patentanspruch 5, gekennzeichnet dadurch, daß der Abschnitt (s) kreisförmig ist und die feststehende Wandung (6) aus einer halbzylindrischen Schale sowie der Lamelle (7) aus flexiblem Werkstoff besteht, letztere im transversalen Schnitt hufeisenförmig gestaucht, und zwar in der Position, wo die Kompaktierkammer (5) dem Abschnitt (S) entspricht.

7. Gerät gem. einem der Patentansprüche 1-4, gekennzeichnet dadurch, daß die bzw. jede Kompaktierkammer (5) begrenzt ist durch zwei parallel entgegengesetzte Bänder (106a), die durch ein erstes feststehendes Wandungselement (106) auf einer Seite geschlossen sind, sowie durch eine zweite, bewegliche Wandung (107), die durch Verschieben verfahrbar ist zwischen den beiden Parallelbändern (106a) auf der der vorgenannten ersten feststehenden Wandung (106) gegenüberliegenden Seite.

8. Gerät gem. einer der Patentansprüche 1-7, gekennzeichnet dadurch, daß es über Einrichtungen zum Konditionieren kompakter Blöcke (17a) in dichte Beutel (21) verfügt, wobei dies ab dem Auswurf der Blöcke aus der Kompaktierkammer (5) erfolgt.

9. Gerät gem. einer der Patentansprüche 1-8, gekennzeichnet dadurch, daß Verlagerungsvorrichtungen dieser beweglichen Teile aus Einrichtungen mit mechanischer, hydraulischer u./oder pneumatischer Steuerung bestehen.

10. Gerät gem. einer der Patentansprüche 1-9, gekennzeichnet dadurch, daß das Produkt aus einer Giessmassenformulierung besteht auf der Grundlage von Harz, geschnittenen Glasfasern, pulverförmigen Mineralfüllstoffen u. ggf. herkömmlichen Zuschlagstoffen.

11. Verfahren zur Kompaktierung vorgeformter Blöcke aus einem verformbaren Produkt, dadurch gekennzeichnet, daß es den Einsatz eines Gerätes gem. Patentansprüche 1-10 zugrundelegt.
